Europäisches Patentamt

(19) European Patent Office

Office européen des brevets

(11) Publication number: **0 018 745**
**B1**

(12) **EUROPEAN PATENT SPECIFICATION**

(45) Date of publication of patent specification: **08.12.82**

(51) Int. Cl.³: **F 23 L 15/04, F 23 J 3/04, F 23 C 3/00**

(21) Application number: **80301201.2**

(22) Date of filing: **16.04.80**

(54) Heat exchanger.

(30) Priority: **19.04.79 PCT/US79/00254**

(43) Date of publication of application:
**12.11.80 Bulletin 80/23**

(45) Publication of the grant of the patent:
**08.12.82 Bulletin 82/49**

(84) Designated Contracting States:
**BE FR GB**

(56) References cited:
**DE - C - 960 847**
**FR - A - 522 047**
**FR - A - 836 065**
**FR - A - 853 582**
**FR - A - 2 188 133**
**US - A - 1 558 493**
**US - A - 1 795 909**
**US - A - 1 848 130**
**US - A - 1 901 370**
**US - A - 3 759 323**
**US - A - 3 889 744**
**US - A - 4 029 146**
**US - A - 4 083 400**

(73) Proprietor: **CATERPILLAR TRACTOR CO.**
**100 Northeast Adams Street**
**Peoria Illinois 61629 (US)**

(72) Inventor: **Staebler, Paul J.**
**R.R. 1**
**Dunlap Illinois 61525 (US)**

(74) Representative: **Brunner, Michael John et al,**
**Gill Jennings & Every 53/64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Heat exchanger

The present invention relates to heat exchangers.

In the past, furnaces used for heat treatment purposes either burned fuel directly within the furnace or fuel was burned externally in a separate burner. Efficient utilization of fuel was not of extreme concern because fuel was relatively inexpensive and readily available. Recently, however, fuel consumption has become of concern due to its increased cost and decreased availability. This has prompted the use of heat exchangers or recuperators in combination with furnaces. Hot exhaust from a furnace is passed through a heat exchanger to give up energy to ambient combustion air prior to it entering the burner.

Such heat exchangers may comprise a heat exchanger core which is rigidly connected to ducts which convey the fluids between which the heat is to be exchanged to and from the core. Such heat exchangers particularly those used in heat treatment furnaces, may operate at very high temperatures approaching 1100°C. As a result, temperature corrosion rates and thermal stresses are high on the cores of such heat exchangers and on the ducts of the heat exchanger, such ducts usually being formed from high temperature resistant steels and superalloys. In addition, heat causes the accumulation of debris from scaling which can eventually cause core plugging.

According to the present invention a heat exchanger having a housing, first and second fluid paths and a heat exchanger core through which the paths pass, includes a body of insulating material defining ducts of the fluid paths; and a plurality of flexible members sealingly attached to the core to locate it in position the flexible members also sealingly separating the fluid paths.

Such a construction reduces thermal stresses, corrosion and debris accumulation attributable to heat.

Preferably, means are provided for trapping debris in the housing.

The flexible members are preferably formed of material substantially similar to that of members used in the core.

Two examples of a heat exchanger constructed in accordance with the present invention will now be described with reference to the accompanying drawings, in which:—

Figure 1 is a diagrammatic view of a first heat exchanger in combination with a burner and a heat treatment furnace;

Figure 2 is an isometric view of a core used in the heat exchanger;

Figure 3 is a cross-sectional view of the first heat exchanger;

Figure 4 is a partial cross-sectional view of the first heat exchanger along the line IV—IV of Figure 3; and,

Figure 5 is a view, similar to Figure 3, illustrating a second heat exchanger.

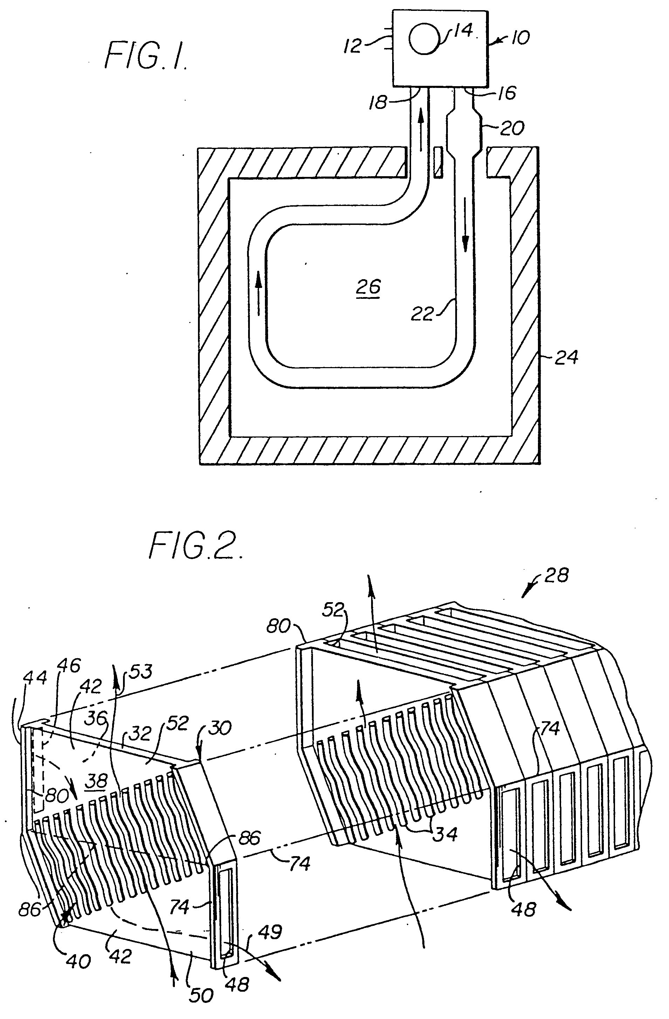

In Figure 1, a heat exchanger 10 is shown which includes an inlet 12 for fluid such as ambient air, an outlet 16, a return port 18 and an exhaust outlet port 14. Adjacent the outlet 16 is a burner 20 connected to a radiant heat tube 22 which extends into and out of a furnace 24 and returns to heat exchanger 10 at return port 18. The burner 20 is connected for preheating fluid in the radiant heat tube 22 prior to the tube entering furnace 24. Materials may be heat treated in the furnace 24. The materials are subjected to heat in an area 26 of the furnace 24 which is surrounded by the radiant heat tube 22.

For purposes of this description, the inlet portion of the heat exchanger 10 generally includes that portion of heat exchanger where air circulates prior to entering tube 22, and the outlet portion generally includes that portion of the heat exchanger where combustion products circulate after leaving tube 22.

A heat exchanger core 28, such as that illustrated in Figure 2, is made by using stacked corrugated sheets of the type shown and described in our U.S. Patent Specification 3,759,323.

The core 28 (Figure 2) comprises a plurality of prefabricated cells 30, each of which includes a hollow corrugated plate 32 having a plurality of side-by-side wave like corrugations 34 formed on opposite walls 36, 38 of the cell.

The hollow plates 32 include full corrugations on each wall 36, 38 in a rectangular area 40. However, the corrugations are pinched or pressed so as to be substantially flat in the triangular areas 42. The plates 32, which are substantially flexible are welded to perimeter plates 44 having openings 46 and 48. With the plates 32 welded to the perimeter plates 44, the individual cells 30 are completed and a plurality of cells 30 are then welded together in side-by-side manner along abutting perimeter plates 44. As a result, a core 28 is formed with inlet portions having openings 46 for admitting fluid such as ambient air which is guided along between the walls 36 and 38 of a single cell and exits at opening 48 as indicated by the arrow 49. Return hot combustion products are admitted into outlet portions having openings 50 formed between the cells 30 and are guided along between the walls of adjacent cells and exit at an opening 52 as indicated by the arrow 53. An efficient heat exchange occurs between the relatively cool and hot fluids separated by the plates 32 due to the large areas of the walls 36 and 38 resulting from their corrugated form.

The plates may be formed of 321 Stainless Steel where lower temperatures are present but INCONEL 750 is preferred due to the possible presence of higher temperatures.

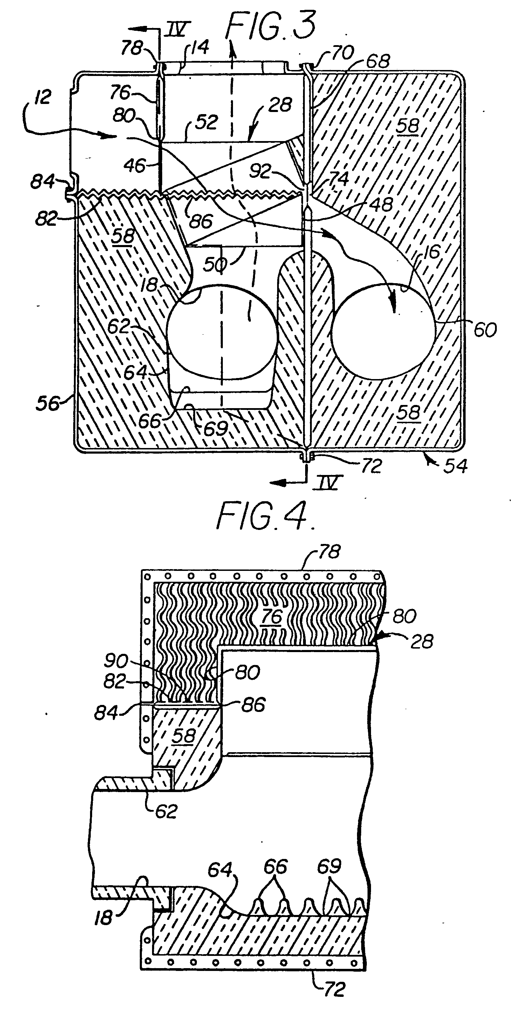

The heat exchanger 10 shown in Figure 3 has a housing 54 formed of a welded sheet metal casing 56. The casing sheet material is preferably SAE 1020 steel. Withing the casing 56 is an insulating material 58 which may be a fibrous material manufactured by a flocculation method. Alternatively, the insulating material 58 might be cast using porous aluminium oxide bonded with phosphoric acid, or commercially available firebrick. The insulating material 58 is preferably No. 22 CASTABLE REFRACTORY manufactured by A.P. Green, but KAOWOOL (RTM) manufactured by B and W or the refractory product FIBERFRAX (RTM) may be used.

The insulating material 58 forms ducts within the casing 56, having a portion 60 ducting air to the burner 20 and a portion 62 for ducting products of combustion from the tube 22. Also, the insulating material 58 is formed to accommodate a core 28 mounted therein adjacent the inlet 12 formed in the casing 56 for admitting ambient air to the core openings 46. The portion 60 is formed in insulating material 58 adjacent the core openings 48. The duct portion 62 is formed adjacent the core openings 50 and the core openings 52 are situated adjacent the exhaust outlet 14 formed in the casing 56. The portion 60 interconnects the openings 48 with the outlet 16 and the portion 62 interconnects the core openings 50 with the return portion 18 (see again Figure 1).

The duct portion 62 has an enlarged cross-sectional area 64 relative to the inlet portion 60 (see Figure 4). As a result, the flow of gas or combustion products in the enlarged area 64 slows and permits any debris, such as scale, to drop out of the fluid steam passing through through the duct. Means are provided for trapping such debris in the enlarged area 64 as it drops out of the slowed fluid stream. Such means includes baffles 66 formed in the bottom of the duct adjacent the larger cross-sectional area 64. Debris settles in pockets 69 between baffles 66 and becomes effectively trapped and thus removed from the stream (See Figure 4). As a result premature plugging of the core 28 is significantly reduced.

The core 28 is sealingly mounted or suspended in the housing 54 by a plurality of plates of corrugated core material such as that of the flexible plates 32. The plates have portions cut away where required in order not to restrict the flow of air through the exchanger core 28. Use of such flexible plates avoids previously discussed problems associated with thermal stress.

As viewed in Figures 3 and 4, one plate 68 is vertically disposed and is welded to the casing 56 at flanges 70, 72, and to the core 28 at its edge 74. A plate 76 is also vertically disposed and is welded to the casing 56 at flange 78 and to the core 28 at the surface 80. A plate 82 is horizontally disposed and is welded to the casing 56 at a flange 84 and to the core 28 along the surface 86. Plates 76, 82 are welded at their intersection 90 and plates 68, 82 are welded at their intersection 92. Where the plates 68, 76, 82 are welded to either the casing 56 or the core 28, the corrugations are pressed flat as previously discussed. Welding is preferred in order to limit leakage of fluid at the connections. Also, it is preferred to provide asbestos gaskets along flanges 70, 72, 78 and 84. As a result of the leakage limiting connections of the plates 68, 76, 82 suspending the core 28 in the casing 56, an effective means is provided for separating the inlet 12, the inlet portion 46, 48 of the core 28 and the inlet portion 60 of the duct from the outlet 14, the outlet portion 50, 52 of the core 28 and the outlet portion 62 of the duct (see also Figure 2).

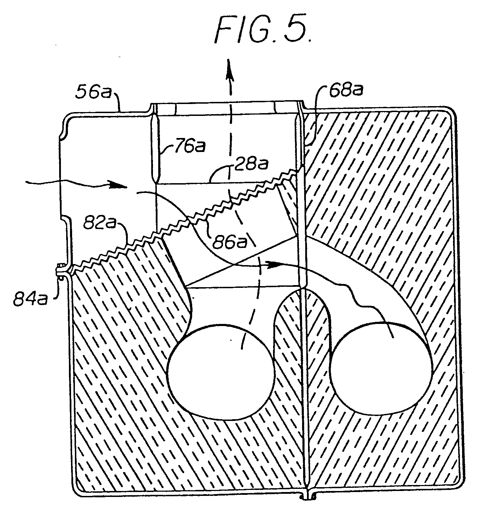

Figure 5 illustrates an alternative in which a plate 82a can be angularly disposed relative to the casing 56a. In this embodiment, the plate 82a is welded to the casing 56a at a flange 84a and to the core 28A along a surface 86a. Also, plates 68a, 76a and 82a are welded together at their common intersecting surfaces as described above. The desired effect is still achieved.

In use ambient air enters the heat exchanger 10 at an inlet 12 and enters the core 28 through the openings 46. The air passes through the plates 32 where it is heated due to heat exchange with fluid passing between the plates. The heated air passes out through core openings 48 and into the duct-inlet portion 60 from where it is directed to the outlet 16.

The air enters the burner 20 where it is further heated. Combustion products are formed and then enter the radiant heat tube 22 and are routed through the furnace 24 inside the tube 22. Having passed through the tube in the furnace 24, the combustion products enter the heat exchanger 10 at the return port 18 and pass to the duct portion 62. Debris drops out of the stream of air when the flow slows in the enlarged portion 64, and is trapped in the pockets 69 between the baffles 66. The combustion products then inter the core 28 through the openings 50 passing between the plates 32 to transfer heat to the air passing through the plates 32. Final exhaust is through the exhaust port 14.

**Claims**

1. A heat exchanger (10) having a housing (54), first and second fluid paths (12, 60, 16; 18, 62, 14 respectively), and a heat exchanger core (28) through which the paths pass, characterized in that a body of insulating material (58) defines ducts (60, 62) of the fluid paths; and a plurality of flexible members (68, 76, 82) are sealingly attached to the core (28) and locate it in position, the flexible members (68, 76, 82) also sealingly separating the fluid paths.

2. A heat exchanger according to claim 1, characterized in that means (66, 69) are provided for trapping debris in the housing (54).

3. A heat exchanger according to claim 1 or claim 2, characterized in that the flexible members (68, 76, 82) are formed of material substantially similar to that of members (32) used in the core (28).

4. A heat exchanger according to any of claims 1 to 3, characterized in that the ducts (60, 62) include portions of relatively larger (64) and smaller (60) cross-sectional areas.

5. A heat exchanger according to claim 4 when dependent on claim 2, characterized in that the means (66, 69) for trapping debris includes baffles (66) formed in the duct (62) adjacent the larger (64) cross-sectional area.

6. A heat exchanger according to claim 3, characterized in that the flexible members (68, 76, 82) and members (32) each comprise a hollow plate having corrugated walls.

7. A heat exchanger according to any of the preceding claims, in combination with a furnace (24) and a radiant heat tube (22) extending through said furnace, the first and second fluid paths through the heat exchanger (10) being connected to inlet and outlet portions respectively of the radiant heat tube (22).

## Revendications

1. Echangeur de chaleur (10) comportant une enveloppe (54) un premier et un second trajets de circulation de fluide (respectivement 12, 60, 16; 18, 62, 14), et un coeur (28) dans lequel ces trajets passent, caractérisé en ce qu'un corps de matière isolante (58) définit des conduits (60, 62) pour les trajets de fluide; et en ce qu'un certain nombre d'éléments flexibles (68, 76, 82) sont fixés de manière étanche au coeur (28) et tiennent celui-ci en position, ces éléments flexibles (68, 76, 82) séparant également de manière étanche les trajets de fluide.

2. Echangeur de chaleur selon la revendication 1, caractérisé en ce que des moyens (66, 69) sont prévus pour piéger les débris dans l'enveloppe (54).

3. Echangeur de chaleur selon la revendication 1 ou 2, caractérisé en ce que les éléments flexibles (68, 76, 82) sont formés d'une matière pratiquement identique à celle des éléments (32) utilisés dans le coeur (28).

4. Echangeur de chaleur selon l'une quelconque des revendications 1 à 3, caractérisé en ce que les conduits (60, 62) comportent des parties dont l'aire de la section est relativement grande (64) et relativement petite (60).

5. Echangeur de chaleur selon la revendication 4 en relation avec la revendication 2, caractérisé en ce que les moyens (66, 69) pour piéger les débris comprennent des écrans ou cloisons (66) formés dans le conduit (62) près de l'aire dont la section est relativement grande. (64).

6. Echangeur de chaleur selon la revendication 3, caractérisé en ce que les éléments flexibles (68, 76, 82) et les éléments (32) sont respectivement constitués par une plaque creuse ayant des parois ondulées.

7. Echangeur de chaleur selon l'une quelconque des revendications précédentes, en combinaison avec un four (24) et un tube de chauffage par rayonnement (22) s'étendant dans le four, caractérisé en ce que le premier et le second trajets de fluide dans l'échangeur de chaleur (10) sont respectivement reliés aux sections d'entrée et de sortie du tube de chauffage par rayonnement (22).

## Patentansprüche

1. Wärmeaustauscher (10) mit einem Gehäuse (54), ersten und zweiten Strömungsmittelpfaden (12, 60, 16 bzw. 18, 62, 14) und einem Wärmeaustauschekern (28) durch den die Pfade verlaufen dadurch gekennzeichnet, daß ein Körper aus Isoliermaterial (58) Leitungen (60, 62) der Strömungsmittelpfade definiert, und daß eine Vielzahl von flexiblen Gliedern (68, 76, 82) abdichtend am Kern (28) befestigt ist und diesen in seiner Position lokalisiert, wobei die flexiblen Glieder (68, 76, 82) ebenfalls in abdichtender Weise die Strömungsmittelpfade trennen.

2. Wärmeaustauscher nach Anspruch 1, dadurch gekennzeichnet, daß Mittel (66, 69) vorgesehen sind, um im Gehäuse (54) Abfall einzufangen.

3. Wärmeaustauscher nach Anspruch 1 oder 2, dadurch gekennzeichnet, daß die flexiblen Glieder (68, 76, 82) aus einem Material im wesentlichen ähnlich dem Material ausgeformt sind, aus welchem die im Kern (28) verwendeten Glieder (32) bestehen.

4. Wärmeaustauscher nach irgendeinem der Ansprüche 1—3, dadurch gekennzeichnet, daß die Leitungen (60, 62) Teile mit ralativ größeren (64) und kleineren (60) Querschnittsflächen aufweisen.

5. Wärmeaustauscher nach Anspruch 4, bei Abhängigkeit von Anspruch 2, dadurch gekennzeichnet, daß die Mittel (66, 69) zum Einfangen von Abfall Prallelemente (66) aufweisen, die in der Leitung (62) benachbart zu der größeren (64) Querschnittsfläche ausgeformt sind.

6. Wärmeaustauscher nach Anspruch 3, dadurch gekennzeichnet, daß die flexiblen Glieder (68, 76, 82) und die Glieder (32) jeweils eine hohle Platte mit gewellten Wänden aufweisen.

7. Wärmeaustauscher nach irgendeinem der vorhergehenden Ansprüche in Kombination mit einem Ofen (24) und einem Strahlungswärmerohr (22), welches sich durch den Ofen erstreckt, wobei die ersten und zweiten Strömungsmittelpfade durch den Wärmeaustauscher (10) mit den Einlaß-, bzw. Auslaß-Teilen des Strahlungsheizrohrs (22) verbunden sind.

FIG.1.

FIG.2.

# FIG.3

# FIG.4.

FIG.5.